# EUROPÄISCHE PATENTANMELDUNG

(11) **EP 3 628 948 A1**
(43) Veröffentlichungstag der Anmeldung: **01.04.2020**
(21) Anmeldenummer: 19200157.6
(22) Anmeldetag: 27.09.2019
(51) Int. Cl.: F25D 23/06

(54) **VAKUUMDÄMMKÖRPER FÜR KÜHL- UND/ODER GEFRIERGERÄTE**

(30) Priorität: 27.09.2018 DE 102018123944
(71) Anmelder: Liebherr-Hausgeräte Ochsenhausen GmbH, 88416 Ochsenhausen (DE)
(72) Erfinder: KERSTNER, Martin, 97080 Würzburg (DE); MEISINGER, Simon, 97753 Karlstadt (DE)
(74) Vertreter: Herrmann, Uwe

(57) **Zusammenfassung**

Die Erfindung betrifft einen Vakuumdämmkörper umfassend einen von einer Folienumhüllung umschlossenen Stützkern, wobei die Folienumhüllung wenigstens eine Siegelnaht umfasst, an der zwei überlappende Folienabschnitte der Umhüllung luftdicht miteinander verbunden sind, und wobei im Inneren des Vakuumdämmkörpers ein elektrisches Bauteil angeordnet ist, welches anhand eines elektrischen Leiters, der durch die Folienumhüllung geführt ist, mit einem externen Partner verbunden werden kann, wobei der Leiter einen als Leiterbahn ausgebildeten, abgeflachten Abschnitt aufweist, der zwischen den überlappenden Folienabschnitten durch die Siegelnaht geführt ist. Die Erfindung betrifft ferner ein Kühl- und/oder Gefriergerät umfassend wenigstens einen derartigen Vakuumdämmkörper als Wärmedämmelement.

## Beschreibung

Die Erfindung betrifft einen wärmedämmenden Vakuumdämmkörper, der ein von einer Folie umschlossenes Kernmaterial aufweist, wobei an der Folie eine elektrische Durchführung vorgesehen ist. Die Erfindung betrifft ferner ein Kühl- und/oder Gefriergerät, der einen derartigen Vakuumdämmkörper als Wärmedämmelement aufweist.

Vakuumdämmkörper mit Stützkern und einer Hülle aus einer Hochbarrierefolie werden immer wichtigere Bestandteile zur Lösung von anspruchsvollen Dämmaufgaben.

Für verschiedene Zwecke kann es nötig sein in einer folienumhüllten Vakuumdämmung elektrische Bauteile vorzusehen, die mit der Umgebung kontaktiert sind. Dies kann zum einen für eingebrachte Sensoren zweckmäßig sein, zum Beispiel um den Gasdruck im Inneren des Vakuumdämmkörpers zu überwachen, aber auch, um aktive Einheiten im Inneren des Vakuumdämmkörpers mit Strom zu versorgen.

Zur Kommunikation mit innenliegenden Sensoren ist es Stand der Technik über RFID-Systeme berührungslos durch die Hochbarrierefolie hindurch zu kommunizieren. Dabei ist es auch üblich, im Vakuumsystem passive Systeme zu verwenden, die durch das außen liegende System mit Strom versorgt werden. Dies ist aber mit starken Verlusten behaftet und nicht zur Übermittlung größerer Leistungen geeignet. Außerdem muss bei Anwendungen mit hohen Anforderungen an das innen vorhandene Vakuum das Ausgasen der eingebrachten Komponenten berücksichtigt werden.

Eine Variation des Systems wäre eine induktive Übertragung durch direkt innerhalb und außerhalb an der Folie anliegende Spulen. Um die Verlustleistung bei der Übertragung gering zu halten wäre ein solcher Aufbau aufwendig.

Eine Durchführung zum Zwecke einer drahtgebundenen Anbindung von elektrischen Elementen im Inneren eines Vakuumdämmkörpers ist aus der WO 2016/120009 A1 bekannt. Diese Durchführung ist in Figur 1 dargestellt. Sie umfasst einen Bolzen 110 mit einem flachen Kopf 111 und mit einem Schaft 112, der ein Außengewinde 113 aufweist. Der Schaft 112 ist durch einen Durchbruch 102 in der Folie 101 des Vakuumdämmkörpers gesteckt. Auf der dem Bolzenkopf 111 gegenüberliegenden Seite der Folie 101 sind eine scheibenförmige Gegenplatte 130 sowie eine Mutter 140 mit einem zum Außengewinde 113 des Bolzens 110 korrespondierenden Innengewinde 143 angeordnet. Zwischen Bolzenkopf 111 und Folie 101 ist eine Dichtscheibe 120 angeordnet. Der Schaft 112 wird durch mittige Löcher 122 und 132 sowohl der Dichtscheibe 120 als auch der Gegenplatte 130 gesteckt. Durch Anziehen der Mutter 140 ist die Folie luftdicht zwischen dem Bolzenkopf 111 und der Gegenplatte 130 verpresst und der Durchbruch 102 mithin luftdicht verschlossen. Zur Durchführung eines Kabels ist der Schaft 112 des Bolzens 110 hohl gestaltet. Ein elektrisches Versorgungs- oder Signalkabel kann also durch diesen inneren Hohlraum 114 des Bolzens 113 durch den Durchbruch 102 in der Folie 101 geführt werden. Wichtig ist dabei, dass auch der Zwischenraum zwischen dem Kabel und den Innenwänden des Hohlraums 114 luftdicht abgedichtet wird.

Die Abdichtung der Durchführung gegenüber der Hochbarrierefolie erfolgt in dieser bekannten Variante also mit Hilfe einer Pressdichtung über eine Dichtscheibe. Um im Rahmen des Herstellungsverfahrens die nötige Presskraft aufzubringen, wird eine steife, vorzugsweise metallische Struktur benötigt, was zusätzliche Komplexität verursachen kann, da sie immer an einer definierten Position mitgeführt werden muss, um Beschädigungen der Folienhülle zu vermeiden.

Aufgabe der Erfindung ist es daher, eine gattungsgemäße elektrische Durchführung bereitzustellen, wobei ein elektrischer Leiter durch die Umhüllung eines Vakuumdämmkörpers geführt werden kann, ohne dass eine mechanische Überpressung der Dichtebene nötig ist.

Vor diesem Hintergrund betrifft die Erfindung einen Vakuumdämmkörper umfassend einen von einer Folienumhüllung umschlossenen Stützkern, wobei die Folienumhüllung wenigstens eine Siegelnaht umfasst, an der zwei überlappende Folienabschnitte der Umhüllung luftdicht miteinander verbunden sind, und wobei im Inneren des Vakuumdämmkörpers ein elektrisches Bauteil angeordnet ist, welches anhand eines elektrischen Leiters, der durch die Folienumhüllung geführt ist, mit einem externen Partner verbunden werden kann, wobei der Leiter einen als Leiterbahn ausgebildeten, abgeflachten Abschnitt aufweist, der zwischen den überlappenden Folienabschnitten durch die Siegelnaht geführt ist.

Da die Leiterbahn durch die ohnehin notwendigerweise vorhandene Siegelnaht der Folienumhüllung geführt ist, kann auf zusätzliche Durchbrüche und mithin Quellen von Undichtigkeiten in der Umhüllung verzichtet werden. Die Leiterbahn kann beim Siegelvorgang der zum Erzeugen der Siegelnaht im selben Arbeitsschritt eingebettet werden. Bei der Siegelnaht handelt es sich vorzugsweise um eine Schweißnaht.

In ersten Versuchen wurden als Leiter mit Kunststoff ummantelte Litzen mit einem Durchmesser von rund 100 µm durch die Siegelnaht geführt. Dabei konnte eine kurzzeitige Dichtheit in der benötigten Größenordnung erreicht werden, allerdings waren die so erzeugten Durchführungen nicht langzeitstabil. Es wird vermutet, dass es bei mechanischen Belastungen zu Spannungen zwischen den so ausgebildeten Leiterbahnen und den überlappenden Folienabschnitten kam und die Adhäsionskräfte nicht ausreichten, um auch bei diesen vorhandenen Spannungen dichte Grenzschichten zu erhalten. Mechanische Belastungen sind unter anderem aufgrund einer Erwärmung zu erwarten, die aufgrund unterschiedlicher Temperaturausdehnungskoeffizienten zu Spannungen zwischen Leiter und Folien führen kann.

Es hat sich gezeigt, dass bei einem Einsatz einer flachen Leiterbahn, wie erfindungsgemäß vorgesehen, derartige Probleme nicht auftreten.

Vorzugsweise ist die Leiterbahn mit Kunststoff beschichtet und weiter vorzugsweise allseitig mit Kunststoff ummantelt. Beispielsweise kann als Leiterbahn ein bandförmiges Stück einer Metallfolie zum Einsatz kommen, welches beidseitig mit Kunststoff beschichtet und vorzugsweise allseitig mit Kunststoff ummantelt ist. Geeignete Kunststoffe umfassen Polyolefine wie beispielsweise Polyethylen, Polypropylen oder Co-Polymere oder Mischungen daraus. Die Kunststoffbeschichtung bzw. - ummantelung der Leiterbahn stellt eine siegelfähige Schicht bzw. einen Haftvermittler dar, der unmittelbar mit dem Kunststoff der Folienumhüllung verbunden, vorzugsweise verschweißt sein kann. Im Falle einer Ummantelung kann der Vakuumdämmkörper auch an den Flanken der Leiterbahn von den Vorzügen eines solchen Mittlers zur Erhöhung der Dichtigkeit und Lebensdauer profitieren.

Die Dicke des als Leiterbahn ausgebildeten Abschnitts liegt vorzugsweise in der Größenordnung der Schichtdicken der Folien der Umhüllung.

Die Schichtdicke der Leiterbahn kann beispielsweise weniger als 50 µm, vorzugsweise weniger als 20 µm betragen. Die Schichtdicke kann beispielsweise auch geringer als 10 µm sein. Mindestdicken zum Erhalt einer ausreichenden Leitungskapazität können beispielsweise 1 µm, 2 µm oder 5 µm betragen. Die angegebenen Schichtdicken beziehen sich auf den Leiter ohne etwaige Beschichtung bzw. Ummantelung.

Die Breite der Leiterbahn kann 50 mm oder weniger, vorzugsweise 30 mm oder weniger betragen. Die Schichtdicke kann unter Aufrechterhaltung einer ausreichenden Leitungskapazität je nach Anwendung beispielsweise auch 20 mm oder weniger oder gar 10 mm oder weniger betragen. Mindestbreiten zum Erhalt einer ausreichenden Leitungskapazität können beispielsweise 1 mm, 2 mm oder 5 mm betragen.

Das Verhältnis von Breite zu Schichtdicke der Leiterbahn kann bei wenigstens 30, vorzugsweise wenigstens 100 und weiter vorzugsweise wenigstens 300 liegen. Durch die geringe Schichtstärke verhält sich die Leiterbahn mechanisch analog zur Hochbarrierefolie, so dass mechanische Belastungen nicht zu Spannungen an den Grenzschichten zwischen Leiterbahn und Hochbarrierefolie führen. Aufgrund der deutlich erhöhten Oberfläche im Vergleich zum Querschnitt wird die durch den Eigenwiderstand der Leiterbahn eingebrachte Wärmeenergie bei geringer Temperaturdifferenz an die umgebenden Schichten abgegeben, so dass keine thermischen Spannungen zwischen Leiterbahn und Folienumhüllung entstehen.

Die Leiterbahn besteht vorzugsweise aus Metall, etwa aus Aluminium, Kupfer, Silber oder Gold oder einer Legierung enthaltend wenigstens eines dieser Metalle. Besonders bevorzugt kann Aluminium sein. Metallfolien können aufgrund der Materialeigenschaften der Metalle in einfacher Weise durch Walzen hergestellt werden. Aluminiumfolien sind billig, in großer Menge kommerziell verfügbar, auch als bereits vorbeschichtete Folien, und haben Leitfähigkeiten in einem für die meisten Anwendungen ausreichenden Bereich. Kupferfolien, Silberfolien oder gar Goldfolien sind teurer, haben jedoch hervorragende Leitfähigkeiten und können daher für einige Anwendungen von Vorteil sein, in denen höhere Leitfähigkeiten von Bedeutung sind. Die Wärmeentwicklung ist bei gegebener Dimensionierung der Leiterbahn umso geringer, je besser die Leitfähigkeit des Metalls ist, sodass gute Leiter auch Vorteile mit Blick auf die Langlebigkeit der Durchführung haben können.

Bei dem elektrischen Bauteil im Inneren des Vakuumdämmkörpers kann es sich um einen Sensor handelt, beispielsweise um einen Sensor zur Messung des Gasdrucks handelt. Weitere sinnvolle Sensoren umfassen beispielsweise Temperaturfühler.

Ferner kann es sich bei dem elektrischen Bauteil im Inneren des Vakuumdämmkörpers um einen Aktor handeln, beispielsweise um ein thermoelektrisches Element. Ein thermoelektrisches Element kann als Wärmepumpe dienen, um einen an einer Seite des Vakuumdämmkörpers liegenden Raum zu erwärmen oder zu kühlen.

Bei der Folie der Folienumhüllung handelt es sich vorzugsweise um eine sogenannte Hochbarrierefolie, welche eine diffusionsdichte Umhüllung eines Vakuumdämmkörpers darstellt. Vorzugsweise liegt die flächenspezifische Gasdurchgangsrate der Folie bei < 10⁻⁵ mbar * l / s * m² und besonders bevorzugt bei < 10⁻⁶ mbar * l / s * m² für Stickstoff und Sauerstoff (gemessen nach ASTM D-3985) und/oder bei < 10⁻² mbar * l / s * m² und besonders bevorzugt bei < 10⁻³ mbar * l / s * m² für Wasserdampf (gemessen nach ASTM F-1249-90). Typischerweise umfasst die Folie eine siegelfähige Oberflächenschicht aus Kunststoff und eine metallische oder mineralische Barriereschicht. Die Folie kann auch beidseitig mit einer siegelfähigen Oberflächenschicht versehen sein Die Oberflächenschicht dient als Tragschicht. Die Barriereschicht kann beispielsweise Aluminium oder Aluminiumoxid umfassen bzw. daraus bestehen.

Es kann vorgesehen sein, dass der Vakuumdämmkörper plattenförmig ist. Es kann sich bei dem erfindungsgemäßen Vakuumdämmkörper also um ein plattenförmiges Vakuumdämmpaneel handeln. Alternative sind auch kistenförmige oder anderweitig komplexe Formen des Vakuumdämmkörpers denkbar, die je nach Einsatzbereich vorteilhaft sein können.

Die Erfindung betrifft weiterhin ein Kühl- und/oder Gefriergerät umfassend wenigstens einen erfindungsgemäßen Vakuumdämmkörper als Wärmedämmelement. Das Gerät kann einen Gerätekorpus umfassen, der einen anhand einer Wärmepumpe gekühlten und über eine großflächige Entnahmeöffnung zugänglichen Innenraum umschließt. Die Entnahmeöffnung kann durch wenigstens eine Tür verschlossen sein. Der oder die Vakuumdämmkörper können als Wärmedämmelemente im Gerätekorpus und/oder in der Tür zum Einsatz kommen. Der Gerätekorpus und die Türe können eine Außenhaut und einen Innenbehälter umfassen. Bei dem Innenbehälter kann es sich um einen Innenbehälter aus einer dünnen Kunststoffplatine handeln. Ein derartiger Innenbehälter wird meist durch Tiefziehen hergestellt. Der Vakuumdämmkörper kann zwischen der Außenhaut und dem Innenbehälter angeordnet sein.

Die Wärmepumpe zur Kühlung des Innenraums kann einen Kältemittelkreislauf mit Kompressor, Verflüssiger, Drossel und Verdampfer umfassen, wobei der Verdampfer innerhalb des vom wärmeisolierten Gerätekorpus umgebenen Innenraums angeordnet ist, beispielsweise an oder hinter der Wand des Innenbehälters. Der Verflüssiger ist in dieser Variante außerhalb des vom wärmeisolierten Gerätekorpus umgebenen Innenraums angeordnet, beispielsweise an der Rückseite des Geräts. Der Kompressor ist typischerweise in einem Maschinenraum angeordnet, der beispielsweise in einem Sockelbereich des Gerätes angeordnet sein kann. Als alternative oder ergänzende Wärmepumpen kommen beispielsweise magnetokalorische Wärmepumpen oder thermoelektrische Wärmepumpen in Frage.

Bei dem Gerät kann es sich um ein reines Kühlgerät, ein reines Gefriergerät oder ein Kühl- und Gefrier-Kombinationsgerät handeln. Auch kann vorgesehen sein, dass die Temperatur des Innenraums oder die Temperatur einzelner Zonen des Innenraums variabel eingestellt werden kann, sodass das Gerät wahlweise als reines Kühlgerät, reines Gefriergerät oder Kühl- und Gefrier-Kombinationsgerät betrieben werden kann.

Weitere Einzelheiten und Vorteile der Erfindung ergeben sich aus dem nachfolgend anhand der Figuren beschriebenen Ausführungsbeispiel. Die Figuren zeigen:

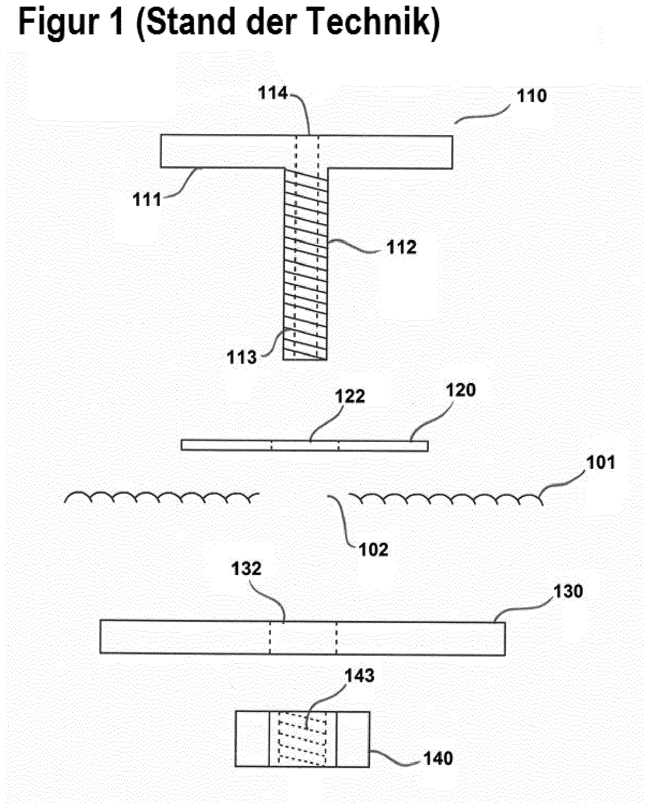

- Figur 1:: eine elektrische Durchführung eines Vakuumdämmkörpers aus dem Stand der Technik;
- Figur 2:: eine Ausführungsform einer elektrischen Durchführung eines erfindungsgemäßen Vakuumdämmkörpers.

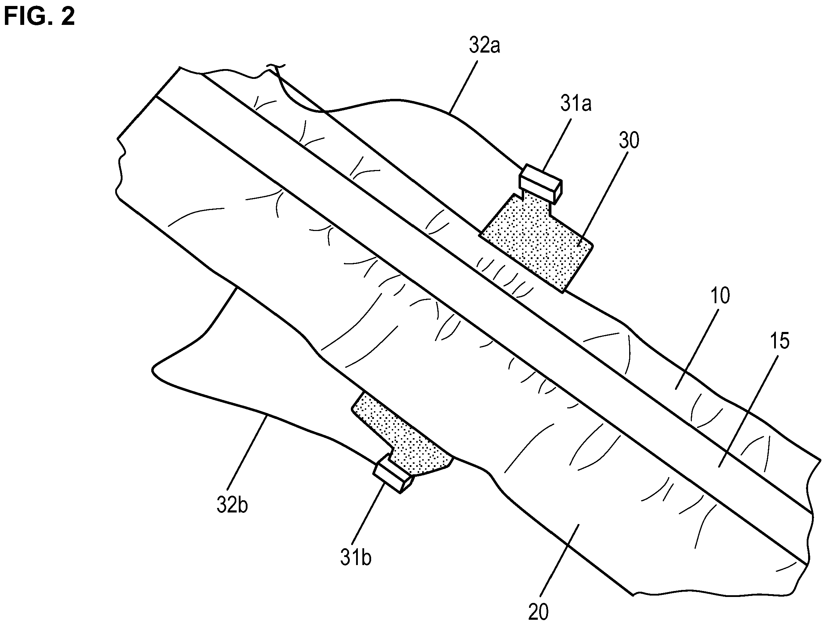

Figur 2 zeigt eine Ausführungsform einer elektrischen Durchführung eines erfindungsgemäßen Vakuumdämmkörpers.

Die Abbildung zeigt zwei überlappende Folienabschnitte 10 und 20 einer Hochbarrierefolie, die entlang einer Schweißnaht 15 miteinander verbunden sind. Die Folienabschnitte 10 und 20 gehören zur Folienumhüllung eines Vakuumdämmkörpers, der in der Figur jedoch nicht vollständig dargestellt ist. Die Hochbarrierefolie umfasst eine siegelfähige Trägerschicht aus Polyethylen und einer aufgedampften metallischen Barriereschicht.

Um ein im Inneren des Vakuumdämmkörpers angeordnetes elektrisches Bauteil, etwa einen Sensor zur Messung des Gasdrucks, einen Temperaturfühler oder ein thermoelektrisches Peltier-Element mit einem außerhalb des Vakuumdämmkörpers angeordneten Partner, beispielsweise eine Stromversorgung verbinden zu können, ist erfindungsgemäß vorgesehen, dass eine dünne Leiterbahn 30 durch die Siegelnaht geführt wird. Bei der Leiterbahn 30 handelt es sich im gezeigten Beispiel um einen Streifen einer beidseitig mit Polyethylen beschichteten Aluminiumfolie mit einer Stärke von 6 µm. Die Breite der Leiterbahn 30 im Bild beträgt 30 mm. Die Leiterbahn 30 liegt in der Ebene der Folienabschnitte 10 und 20 und ist senkrecht zu deren Ausbreitungsrichtung durch die Schweißnaht 15 geführt.

Die Leiterbahn 30 wird beim Siegelvorgang der zum Erzeugen der Schweißnaht 15 im selben Arbeitsschritt zwischen den Folienabschnitte 10 und 20 eingeschweißt. Die Kunststoffbeschichtung der Leiterbahn 30 dient dabei als Haftvermittler zu den Trägerschichten der Folienabschnitte 10 und 20.

Die Leiterbahn ist an beiden Seiten, d.h. an der Innenseite des Vakuumdämmkörpers und an der Außenseite des Vakuumdämmkörpers jeweils anhand eines elektrischen Verbindungselements 31a bzw. 31b mit einem elektrischen Kabel 32a bzw. 32b verbunden, das letztlich mit dem elektrisches Bauteil im Inneren des Vakuumdämmkörpers bzw. mit dem Partner außerhalb des Vakuumdämmkörpers in Verbindung steht.

Durch die geringe Schichtstärke verhält sich die Leiterbahn 30 mechanisch analog zu den Folienabschnitte 10 und 20 der Hochbarrierefolie, so dass mechanische Belastungen nicht zu Spannungen an den Grenzschichten zwischen Leiterbahn 30 und Folienabschnitten 10 und 20 führen. Aufgrund der deutlich erhöhten Oberfläche im Vergleich zum Querschnitt wird die durch den Eigenwiderstand der Leiterbahn 30 eingebrachte Wärmeenergie bei geringer Temperaturdifferenz an die umgebenden Folienabschnitte 10 und 20 abgegeben, so dass keine thermischen Spannungen zwischen Leiterbahn 30 und Folienabschnitten 10 und 20 entstehen.

## Patentansprüche

1. Vakuumdämmkörper umfassend einen von einer Folienumhüllung umschlossenen Stützkern, wobei die Folienumhüllung wenigstens eine Siegelnaht umfasst, an der zwei überlappende Folienabschnitte der Umhüllung luftdicht miteinander verbunden sind, und wobei im Inneren des Vakuumdämmkörpers ein elektrisches Bauteil angeordnet ist, welches anhand eines elektrischen Leiters, der durch die Folienumhüllung geführt ist, mit einem externen Partner verbunden werden kann,
**dadurch gekennzeichnet,**
**dass** der Leiter einen als Leiterbahn ausgebildeten, abgeflachten Abschnitt aufweist, der zwischen den überlappenden Folienabschnitten durch die Siegelnaht geführt ist.

2. Vakuumdämmkörper nach Anspruch 1, **dadurch gekennzeichnet, dass** die Leiterbahn mit Kunststoff beschichtet und vorzugsweise allseitig mit Kunststoff ummantelt ist.

3. Vakuumdämmkörper nach einem der vorhergehenden Ansprüche, **dadurch gekennzeichnet, dass** die Schichtdicke der Leiterbahn weniger als 50 µm, vorzugsweise weniger als 20 µm beträgt.

4. Vakuumdämmkörper nach einem der vorhergehenden Ansprüche, **dadurch gekennzeichnet, dass** die Breite der Leiterbahn 50 mm oder weniger, vorzugsweise 30 mm oder weniger beträgt.

5. Vakuumdämmkörper nach einem der vorhergehenden Ansprüche, **dadurch gekennzeichnet, dass** das Verhältnis von Breite zu Schichtdicke der Leiterbahn bei wenigstens 30, vorzugsweise wenigstens 100 und weiter vorzugsweise wenigstens 300 liegt.

6. Vakuumdämmkörper nach einem der vorhergehenden Ansprüche, **dadurch gekennzeichnet, dass** die Leiterbahn aus Metall besteht, vorzugsweise aus Aluminium, Kupfer, Silber oder Gold oder Legierungen enthaltend wenigstens eines dieser Metalle, weiter vorzugsweise aus Aluminium.

7. Vakuumdämmkörper nach einem der vorhergehenden Ansprüche, **dadurch gekennzeichnet, dass** es sich bei dem elektrischen Bauteil im Inneren des Vakuumdämmkörpers um einen Sensor handelt, beispielsweise um einen Sensor zur Messung des Gasdrucks, oder dass es sich bei dem elektrischen Bauteil im Inneren des Vakuumdämmkörpers um einen Aktor handelt, beispielsweise um ein thermoelektrisches Element.

8. Vakuumdämmkörper nach einem der vorhergehenden Ansprüche, **dadurch gekennzeichnet, dass** die Folie der Umhüllung eine siegelfähige Oberflächenschicht aus Kunststoff und eine metallische oder mineralische Barriereschicht umfasst.

9. Kühl- und/oder Gefriergerät umfassend wenigstens einen Vakuumdämmkörper nach einem der vorhergehenden Ansprüche als Wärmedämmelement.

10. Kühl- und/oder Gefriergerät nach Anspruch 9, **dadurch gekennzeichnet, dass** das Kühl- und/oder Gefriergerät einen Gerätekorpus umfasst, der einen anhand einer Wärmepumpe gekühlten und über eine großflächige Entnahmeöffnung zugänglichen Innenraum umschließt, wobei die Entnahmeöffnung durch wenigstens eine Tür verschlossen ist, und wobei der oder die Vakuumdämmkörper als Wärmedämmelemente im Gerätekorpus und/oder in der Tür zum Einsatz kommen.
